# EUROPÄISCHE PATENTANMELDUNG

(11) **EP 4 779 931 A1**
(43) Veröffentlichungstag der Anmeldung: **22.07.2026**
(21) Anmeldenummer: 25225662.3
(22) Anmeldetag: 19.12.2025
(51) Int. Cl.: H04L 9/40, H04W 4/44, H04W 12/0431, H04W 12/08

(54) **ZUGRIFFSSTEUERUNG AUF EIN KRAFTFAHRZEUG**

(30) Priorität: 15.01.2025 DE 102025101352
(71) Anmelder: Bayerische Motoren Werke Aktiengesellschaft, 80809 München (DE)
(72) Erfinder: Hippler, Marco, 81541 München (DE); Knott, Thorsten, 83104 Tuntenhausen (DE); Reinhart, Lukas, 85354 Freising (DE)

(57) **Zusammenfassung**

Die Nutzung eines Kraftfahrzeugs ist mittels eines digitalen Schlüssels abgesichert. Es wird vorgeschlagen, in einem Verfahren zum Bereitstellen eines solchen Schlüssels durch einen Sender an einen Empfänger eine erste und eine zweite Nachricht des Empfängers jeweils an einen Schlüsseldienst anhand eines jeweils mitgesandten öffentlichen Schlüssels des Empfängers einander zuzuordnen. Die erste Nachricht umfasst ein Geheimnis, das zuvor vom Sender an den Empfänger und den Schlüsseldienst übermittelt wurde, und die zweite Nachricht umfasst eine Attestierung. Die Attestierung kann dann vom Schlüsseldienst signiert werden, um den erstellten digitalen Schlüssel nutzbar zu machen.

## Beschreibung

Die vorliegende Erfindung betrifft die Zugriffssteuerung auf ein Kraftfahrzeug. Insbesondere betrifft die Erfindung die Erstellung eines digitalen Schlüssels zur Zugriffssteuerung auf das Kraftfahrzeug.

Ein Kraftfahrzeug kann mittels eines digitalen Fahrzeugschlüssels abgesichert sein. Dazu werden auf dem Kraftfahrzeug und auf einem mobilen Gerät jeweils digitale Schlüssel in Form von vorbestimmten kryptografischen Konstrukten abgelegt. Zum Zugriff auf das Kraftfahrzeug können das Gerät und das Kraftfahrzeug drahtlos miteinander kommunizieren und ein vorbestimmtes kryptografisches Verfahren unter Verwendung der Schlüssel durchführen. Eine solche Technik ist als Digitaler Fahrzeugschlüssel (Digital Car Key) bekannt, der vom "Car Connectivity Consortium" spezifiziert wird.

Bezüglich des Konzepts digitaler Fahrzeugschlüssel können unterschiedliche Rollen vorbestimmt sein, denen unterschiedliche Berechtigungen zugeordnet sind, beispielsweise ein "Eigentümer" und ein "Freund". Ein Eigentümer kann für einen Freund einen neuen digitalen Fahrzeugschlüssel erstellen, dem vorbestimmte Rechte zugeordnet sind. Zur Erstellung und Hinterlegung des neuen Schlüssels an den erforderlichen Stellen ist ein Verfahren definiert, das wenigstens den Eigentümer, den Freund und eine Schlüsselverwaltung einschließt.

In einem Verfahrensschritt kann vom Eigentümer an den Freund eine Einladung zur Erstellung eines Schlüssels gesandt werden. Die Kommunikation kann mittels eines zweiten Faktors abgesichert werden, der auf einem anderen physischen Kanal als die Einladung an den Freund übertragen wird. Es hat sich gezeigt, dass trotzdem die Gefahr eines Janusangriffs (auch: Mittelsmann-Angriff oder "man-in-the-middle attack") bestehen kann, bei der Nachrichten durch einen Dritten abgefangen und wieder eingespielt werden, um letztlich unrechtmäßig einen Schlüssel für das Kraftfahrzeug zu erlangen.

Eine der vorliegenden Erfindung zu Grunde liegende Aufgabe besteht in der Bereitstellung eines Verfahrens, mit dem der Erstellungsprozess eines digitalen Schlüssels, der von einem Sender an einen Empfänger bereitgestellt wird, sicherer gestaltet werden kann. Das Verfahren löst diese Aufgabe mittels der Gegenstände der unabhängigen Ansprüche. Unteransprüche geben bevorzugte Ausführungsformen wieder.

Die vorliegende Erfindung geht aus von einem Verfahren für die Erstellung eines digitalen Fahrzeugschlüssels, bei dem eine erste Entität ein Nutzungsrecht an eine zweite Entität vergibt. Vorliegend wird die erste Entität "Sender" und die zweite Entität "Empfänger" genannt.

Es wird vorgeschlagen, in einem Verfahren zum Bereitstellen eines solchen Schlüssels durch einen Sender an einen Empfänger eine erste und eine zweite Nachricht des Empfängers jeweils an einen Schlüsseldienst anhand eines jeweils mitgesandten öffentlichen Schlüssels des Empfängers einander zuzuordnen. Die erste Nachricht umfasst ein Geheimnis, das zuvor vom Sender an den Empfänger und den Schlüsseldienst übermittelt wurde, und die zweite Nachricht umfasst eine Attestierung. Die erste Nachricht kann als "sendPin()", die zweite Nachricht "trackKey()" bezeichnet werden. Die Attestierung kann dann vom Schlüsseldienst signiert werden, um den erstellten digitalen Schlüssel nutzbar zu machen.

Die vorliegende Erfindung stellt eine vorteilhafte Änderung einer Vorgehensweise dar, die im Digital Key Standard des Car Connectivity Consortium vorgeschlagen ist. Hierzu wird insbesondere auf Kapitel 11-5 von Version 4 des Digital Key Standard hingewiesen.

Der Sender besitzt üblicherweise einen digitalen Fahrzeugschlüssel, mit dem er selbst Verfügungsgewalt über ein Kraftfahrzeug hat, und der es ihm ermöglicht, einen neuen Fahrzeugschlüssel zu validieren. Sender und Empfänger verfügen über Geräte, mit denen digitale Fahrzeugschlüssel (als kryptografische Konstrukte) gespeichert und verwaltet werden können. Diese Geräte können jeweils insbesondere ein Mobilgerät wie ein Smart Phone, eine Smart Watch, ein Smart Band, einen Tablet-Computer, einen Laptop-Computer oder ein dediziertes Gerät ("Fob") umfassen.

Das Konzept des Digitalen Fahrzeugschlüssels implementiert bevorzugt ein asymmetrisches kryptografisches Verschlüsselungsverfahren. Dabei sind dem Sender und dem Empfänger jeweils jeweils ein Schlüsselpaar zugeordnet, das einen öffentlichen und einen privaten Schlüssel umfasst. Eine Verschlüsselung, die mit einem der Schlüssel durchgeführt wurde, kann nur mit dem anderen rückgängig gemacht werden. Der private Schlüssel sollte nur seinem Eigentümer bekannt sein, während der öffentliche Schlüssel praktisch beliebig publiziert werden kann.

Nutzt eine Person ein Gerät, auf dem ein privater Schlüssel abgespeichert ist, um auf einen abgespeicherten digitalen Fahrzeugschlüssel oder einen privaten Schlüssel zuzugreifen bzw. um ein kryptografisches Verfahren auf der Basis eines solchen Fahrzeugschlüssels zu nutzen, ist es üblicherweise erforderlich, dass sich die Person zuerst gegenüber dem Mobilgerät authentifiziert. Dazu kann die Person ein biometrisches Merkmal vorweisen oder ein vorbestimmtes Geheimnis (Passwort, PIN) eingeben. Die Authentifikation kann durch ein Betriebssystem des Geräts geprüft werden.

Vereinfachend wird hierin davon gesprochen, dass der Sender oder der Empfänger gewisse Handlungen vornimmt oder Funktionen ausführt, auch wenn dazu streng genommen eine Handlung einer Person, die ein entsprechendes Gerät bedient, erforderlich ist. Eine Kommunikation eines Sendergeräts bzw. eines Empfängergeräts mit einem anderen Gerät erfolgt bevorzugt drahtlos, wofür insbesondere ein Mobilfunknetz oder eine direkte Übertragung mittels Radiowellen verwendet werden kann.

Wird ein Umfeld nach Release 3 des CCC-Standards vorausgesetzt, so kann der Sender einen Eigentümer (owner) und der Empfänger einen Freund (friend) umfassen, wobei beide letztlich durch natürliche Personen repräsentiert sind. In einem Umfeld nach Release 4 des CCC-Standards können Sender und Empfänger jeweils eine von mehreren vorbestimmten Rollen besetzen, welche eine entsprechende Erteilung bzw. Weitergabe von Rechten erlaubt. Außerdem kann ein Sender oder ein Empfänger auch durch ein automatisches System repräsentiert sein; in diesem Fall kann z. B. von einem Server Based Owner Device (SBOD) oder einem Server Based Friend Device (SBFD) gesprochen werden.

Ein Dienst, beispielsweise ein Schlüsseldienst, ein Austauschdienst oder ein Verfolgungsdienst, ist bevorzugt durch einen Computer oder einen Server realisiert. Der Dienst kann in einer Cloud angesiedelt sein und über ein Kommunikationsnetz erreicht werden. Das Kommunikationsnetz kann teilweise drahtlos ausgeführt sein und insbesondere ein Mobilfunknetz umfassen. Dienste untereinander können ebenfalls vernetzt sein, alternativ drahtlos oder drahtgebunden.

Genauer gesagt umfasst ein Verfahren zum Bereitstellen eines beschriebenen digitalen Fahrzeugschlüssels durch einen Sender an einen Empfänger Schritte des Übermittelns, vom Empfänger an einen Schlüsseldienst, eines öffentlichen Schlüssels des Empfängers sowie eines Geheimnisses; des Vergleichens, durch den Schlüsseldienst, des vom Empfänger empfangenen Geheimnisses mit einem zuvor bezüglich desselben Schlüssels vom Sender empfangenen Geheimnis; des Zuordnens, durch den Schlüsseldienst, eines Vergleichsergebnisses zum empfangenen öffentlichen Schlüssel des Empfängers; des Übermittelns, vom Empfänger an den Schlüsseldienst, des öffentlichen Schlüssels des Empfängers sowie einer Attestierung eines durch den Empfänger erstellten Schlüssels; des Bestimmens, durch den Schlüsseldienst, dass dem zuletzt vom Empfänger empfangenen öffentlichen Schlüssel ein positives Vergleichsergebnis zugeordnet ist; und des Signierens der Attestierung durch den Schlüsseldienst.

Die vom Empfänger an den Schlüsseldienst übermittelte erste Nachricht, die das Geheimnis enthält, und die zweite Nachricht, die die Attestierung umfasst, können so verbessert einander zugeordnet werden. Selbst wenn eine dritte Partei einen Parameter der ersten Nachricht erraten sollte, kann sie die zweite Nachricht nicht so erstellen, dass der Schlüsseldienst der dritten Partei bei der Erlangung eines funktionierenden digitalen Schlüssels für das Kraftfahrzeug assistiert.

Die Attestierung wird bevorzugt an das Kraftfahrzeug übermittelt und dort abgespeichert. Üblicherweise muss die Attestierung vor einer ersten Nutzung des Kraftfahrzeugs auf der Basis des Schlüssels ans Kraftfahrzeug übermittelt werden. Wird dann der Schlüssel an dem Kraftfahrzeug vorgewiesen, so kann die Nutzung des Kraftfahrzeugs freigegeben werden. Die Attestierung kann direkt vom Schlüsseldienst an das Kraftfahrzeug übermittelt werden. Sollte diese Kommunikation nicht möglich sein, beispielsweise weil eine drahtlose Übertragungsstrecke gestört ist, so kann die Attestierung auch vom Schlüsseldienst an den Empfänger übermittelt und von diesem am Kraftfahrzeug vorgewiesen werden.

Der Sender kann eine Beschreibung des Schlüssels bestimmen und an den Empfänger übermitteln; und der Empfänger kann den Schlüssel auf der Basis der Beschreibung erstellen. Die Beschreibung kann Eigenschaften und insbesondere Rechte des Schlüssels umfassen und als Erstellungsanforderung für den Schlüssel dienen. Der Sender kann dem Empfänger eine Einladung zur Erstellung des Schlüssels übermitteln, wobei die Einladung die Beschreibung umfasst.

Der Sender kann zusammen mit dem Geheimnis eine Identifikation der Beschreibung an den Schlüsseldienst übermitteln. Der Empfänger kann eine Identifikation der Beschreibung zusammen mit dem Geheimnis an den Schlüsseldienst übermitteln. Der Schlüsseldienst vergleicht bevorzugt Geheimnisse miteinander, die übereinstimmenden Identifikationen zugeordnet sind, die vom Sender bzw. vom Empfänger empfangen wurden.

Die Identifikation kann auch sharingId genannt werden. Die Identifikation kann einen Hash über die Beschreibung umfassen. Der Hash kann nach einem vorbestimmten, allgemeinen Verfahren oder als kryptografischer Hash bezüglich eines vorbestimmten Schlüssels erstellt sein.

Der Empfänger kann den erstellten Schlüssel an den Sender übermitteln; der Sender kann den erstellten Schlüssel signieren; und der Sender kann den signierten Schlüssel an den Empfänger übermitteln. Erst wenn der Schlüssel vom Sender signiert ist, kann er weiterverarbeitet bzw. letztlich erfolgreich zur Steuerung des Kraftfahrzeugs eingesetzt werden.

Der Sender kann das Geheimnis initial bestimmen und an den Schlüsseldienst sowie an den Empfänger übermittelt. Bevorzugt werden die Einladung und das Geheimnis auf unterschiedlichen Wegen vom Sender an den Empfänger übermittelt. Dazu können unterschiedliche Übertragungswege oder unterschiedliche Übermittlungsverfahren gewählt werden. Beispielsweise kann die Einladung direkt oder über ein zwischengeschaltetes Postfach über ein Datennetz übermittelt werden, während das Geheimnis etwa per Post, mündlich oder per SMS an den Empfänger übermittelt werden kann. Seitens des Empfängers kann eine Person dazu aufgefordert werden, das empfangene Geheimnis manuell neu einzugeben, sodass es durch das Empfängergerät verarbeitet werden kann.

Der Empfänger kann die Attestierung an den Schlüsseldienst übermitteln, nachdem ihm der Schlüsseldienst einen Hinweis auf ein positives Vergleichsergebnis übermittelt hat. Das Vergleichsergebnis kann nur positiv sein, wenn beide Geheimnisse miteinander übereinstimmen. Stimmen sie nicht überein oder können nicht zwei Geheimnisse bestimmt werden, die einander zugeordnet sind, so fällt das Vergleichsergebnis negativ aus. ein nicht vorliegendes Vergleichsergebnis wird bevorzugt als negatives Ergebnis angesehen.

In einer Ausführungsform umfasst das Verfahren im Wesentlichen folgende Schritte:
- Bestimmen, durch den Sender, eines Geheimnisses sowie einer Beschreibung des zu erstellenden Schlüssels;
- Übermitteln, vom Sender an einen Schlüsseldienst, des Geheimnisses sowie einer Identifikation der Beschreibung;
- Zuordnen, durch den Schlüsseldienst, des Geheimnisses zu der Identifikation;
- Übermitteln, vom Sender an den Empfänger, des Geheimnisses sowie der Beschreibung des zu erstellenden Schlüssels;
- Erstellen, durch den Empfänger, des digitalen Schlüssels auf der Basis der Beschreibung;
- Übermitteln, vom Empfänger an den Schlüsseldienst, eines öffentlichen Schlüssels des Empfängers, eines Geheimnisses sowie einer Identifikation der Beschreibung;
- Vergleichen, durch den Schlüsseldienst, des vom Empfänger erhaltenen Geheimnisses mit einem Geheimnis, das der vom Empfänger erhaltenen Identifikation zugeordnet ist; und Zuordnen eines Vergleichsergebnisses zum öffentlichen Schlüssel des Empfängers;
- Übermitteln, vom Empfänger an den Schlüsseldienst, des öffentlichen Schlüssels des Empfängers sowie einer Attestierung des erstellten Schlüssels;
- Bestimmen, durch den Schlüsseldienst, dass dem zuletzt vom Empfänger empfangenen öffentlichen Schlüssel ein positives Vergleichsergebnis zugeordnet ist; und
- Übermitteln der Attestierung vom Schlüsseldienst an das Kraftfahrzeug.

Im beschriebenen Szenario, in dem einem Empfänger von einem Sender ein digitaler Schlüssel, der die Nutzung eines vorbestimmten Kraftfahrzeugs absichert, bereitgestellt werden soll, betrifft ein weiterer Aspekt der vorliegenden Erfindung einen Schlüsseldienst. Der Schlüsseldienst ist dazu eingerichtet, von einem Empfänger einen öffentlichen Schlüssel des Empfängers sowie ein Geheimnis zu empfangen; das vom Empfänger empfangene Geheimnis mit einem zuvor bezüglich desselben Schlüssels von einem Sender empfangenen Geheimnis zu vergleichen; ein Vergleichsergebnis dem empfangenen öffentlichen Schlüssel des Empfängers zuzuordnen; vom Empfänger den öffentlichen Schlüssel des Empfängers sowie eine Attestierung eines durch den Empfänger erstellten Schlüssels zu empfangen; zu bestimmen dass dem zuletzt vom Empfänger empfangenen öffentlichen Schlüssel ein positives Vergleichsergebnis zugeordnet ist; und die Attestierung zu signieren.

Der Schlüsseldienst ist bevorzugt dazu eingerichtet, ein hierin beschriebenes Verfahren zumindest teilweise auszuführen. Dazu kann der Schlüsseldienst eine insbesondere elektronisch ausgeführte Verarbeitungseinrichtung umfassen, die beispielsweise einen integrierten Schaltkreis, einen programmierbaren Logikbaustein oder einen programmierbaren Mikrocomputer umfasst. Das Verfahren kann in Form einer Konfiguration oder als Computerprogrammprodukt mit Programmcodemitteln für die Verarbeitungseinrichtung realisiert sein. Die Konfiguration oder das Computerprogrammprodukt kann auf einem computerlesbaren Datenträger abgespeichert sein. Merkmale oder Vorteile des Verfahrens können auf die Vorrichtung übertragen werden oder umgekehrt.

Bevorzugt ist der Schlüsseldienst ferner dazu eingerichtet, die signierte Attestierung an das Kraftfahrzeug und/oder an den Empfänger zu übermitteln bzw. weiterzuleiten. Der Empfänger kann den Schlüssel am Kraftfahrzeug vorweisen und dadurch Zugriff auf eine vorbestimmte Fahrzeugfunktion erhalten. Die Fahrzeugfunktion kann insbesondere das Öffnen einer Zentralverriegelung oder das Starten eines Antriebsmotors umfassen.

Die Erfindung wird nun mit Bezug auf die beigefügten Zeichnungen genauer beschrieben, in denen:
- Figur 1: ein System; und
- Figur 2: ein Ablaufdiagramm eines Verfahrens
illustriert.

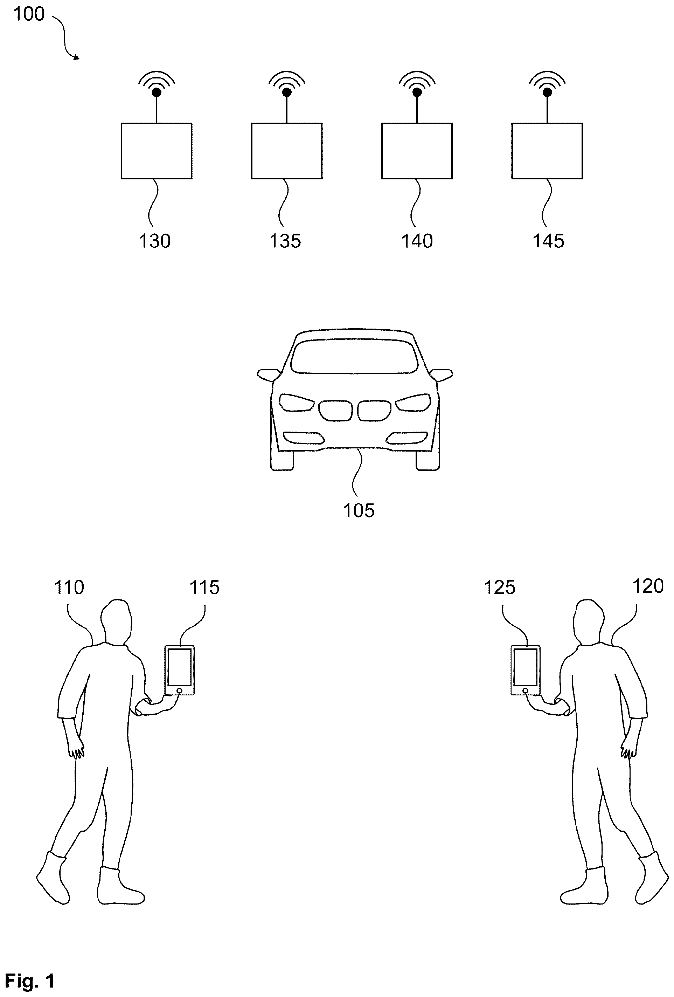

Figur 1 zeigt ein System 100 zur Steuerung eines Zugriffs auf ein Kraftfahrzeug 105. Das System 100 ist bevorzugt dazu eingerichtet, nach den Vorgaben des Digital Car Key (CCC) zu arbeiten. Dabei kann eine Vielzahl Verfahren ausgeführt werden, die unterschiedliche Aspekte oder Funktionen eines Digital Car Key betreffen können. Ein hierin beschriebenes Verfahren betrifft die Erstellung eines digitalen Schlüssels von einem Sender 110 des Kraftfahrzeugs 105 an einen Empfänger 115, das Hinterlegen des Schlüssels und das Bereitstellen passender kryptografischer Informationen an das Kraftfahrzeug 105.

Der Sender 110 verwendet ein Sendergerät 120 und der Empfänger 115 ein Empfängergerät 125. Die Geräte 120, 125 sind hier Personen 110, 115 zugeordnet und können jeweils etwa in Form von Smartphones realisiert sein. Im Folgenden wird der besseren Verständlichkeit halber davon gesprochen, dass der Sender 110 oder der Empfänger 115 eine Handlung vornimmt, selbst wenn auf technischer Ebene dazu ein Sendergerät 120 oder ein Empfängergerät 125 verwendet wird. Auf einen Eingriff oder eine Aktion spezifisch durch eine Person 110, 115 wird im Folgenden spezifisch hingewiesen. Die Geräte 120, 125 können vom System 100 umfasst sein, die Personen 110, 115 jedoch nicht.

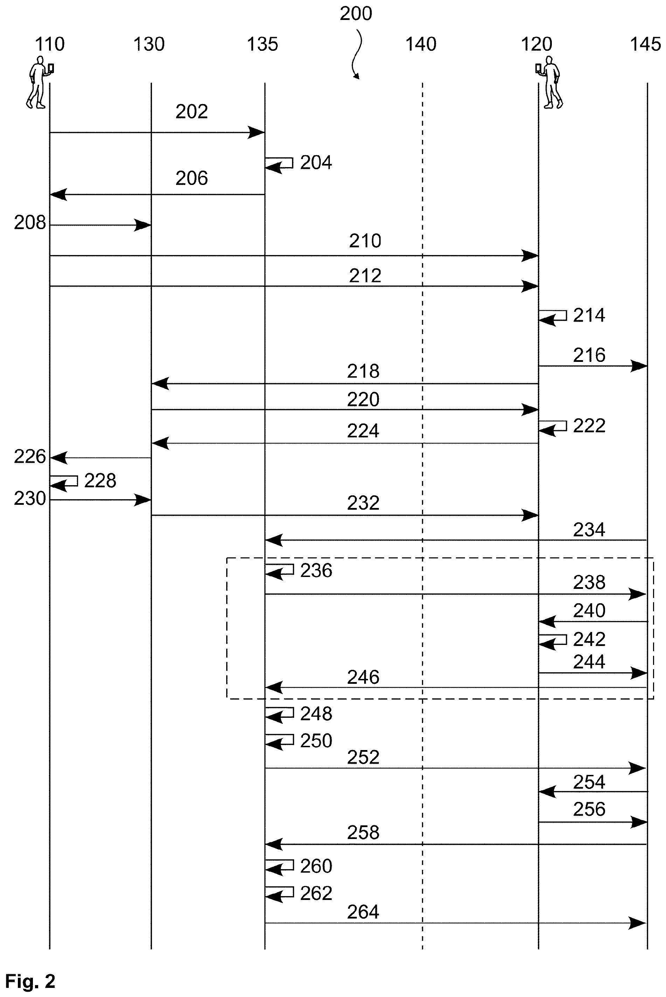

Das System 100 kann einen optionalen Austauschdienst 130 (Relay Server), einen Schlüsseldienst 135 (OEM Server), einen optionalen Übertragungsdienst 140 (Routing Server) und einen Verfolgungsdienst 145 (Friend Device Server) umfassen. Der Austauschdienst 130 und/oder der Verfolgungsdienst 145 können in manchen Ausführungsformen entfallen. Der Übertragungsdienst 140 ist zur besseren Vergleichbarkeit mit bekannten Verfahren angegeben; im Verfahren von Figur 2 spielt er keine Rolle.

Der Schlüsseldienst 135 ist dazu eingerichtet, Schlüssel für das Kraftfahrzeug 105 zu verwalten. Insbesondere kann der Schlüsseldienst 135 als zentrale Instanz Schlüssel kryptografisch signieren, um ihnen Gültigkeit zu verleihen. Optional kann der Schlüsseldienst 135 auch mit dem Kraftfahrzeug 105 verbundene bzw. auf das Kraftfahrzeug 105 bezogene Daten verwalten, beispielsweise bezüglich einer Person, die Fahrer oder Passagier des Kraftfahrzeugs 105 ist.

Der Austauschdienst 130 ist dazu eingerichtet, Informationen entgegenzunehmen und unter einer Zugriffsadresse zur Verfügung zu stellen. Unterschiedliche hinterlegte Informationen sind voneinander getrennt, sodass jede Zugriffsadresse nur zu genau den hinterlegten Informationen führt und Informationen bezüglich unterschiedlicher Schlüssel nicht vermischt werden. Der Übertragungsdienst 140 kann im Wesentlichen eine Weiterleitung von Datenverkehr leisten, beispielsweise nach Art eines Routers oder eines Proxy Servers. Allerdings können Daten nicht durchgeleitet, sondern dort hinterlegt werden, sodass sie von einem Empfänger abgeholt werden müssen.

Der Verfolgungsdienst 145 ist dazu eingerichtet, zu verfolgen, welche digitalen Schlüssel für das Kraftfahrzeug 105 aktiv sind. Zu jedem erzeugten Schlüssel kann eine Historie angelegt werden, die insbesondere angeben kann, von wann bis wann der Schlüssel gültig ist oder war oder an wen der Schlüssel wann ausgehändigt wurde. Technisch kann dafür gesorgt werden, dass ein erstellter Schlüssel erst dann zur Nutzung des Kraftfahrzeugs 105 verwendet werden kann, wenn der Schlüssel beim Verfolgungsdienst 140 verfolgt ist.

Figur 2 zeigt ein Ablaufdiagramm eines Verfahrens 200 zur Erstellung eines digitalen Schlüssels für einen Empfänger 115 durch einen Sender 110. Von oben nach unten verläuft eine Zeit. In horizontaler Richtung sind Nachrichten dargestellt, die zwischen Beteiligten ausgetauscht oder Aktionen, die durch Beteiligte durchgeführt werden.

Das Verfahren 200 kann eine Abwandlung eines bekannten Verfahrens zur Weitergabe eines digitalen Schlüssels sein. Das dargestellte Verfahren kann sich insbesondere in den Schritten 232, 248, 256 258 und 260 von einem bekannten Verfahren unterscheiden. Für ein bekanntes Verfahren wird auf die Kapitel 11. 5 sowie 17.7 von Version 4 des CCC-Standards "Digital Car Key" verwiesen.

In einem Schritt 202 kann der Sender 110 Informationen bezüglich des zu erstellenden Schlüssels sowie ein Geheimnis beim Schlüsseldienst 135 hinterlegen. Die übermittelten Informationen können eine Identifikation einer Beschreibung des zu erstellenden Schlüssels umfassen. Die Identifikation kann insbesondere einen Hash über die Beschreibung umfassen und wird gelegentlich auch sharingId genannt. Das Geheimnis ist bevorzugt durch den Sender 110 bestimmt, beispielsweise als Zufallscode, und kann insbesondere eine Ziffern- oder Zeichenfolge umfassen.

In einem Schritt 204 kann das Geheimnis beim Schlüsseldienst 135 abgelegt werden. Die Identifikation kann ebenfalls abgelegt werden, wobei eine Zuordnung erfolgen kann, sodass ein abgelegtes Geheimnis aufgrund einer Identifikation aufgefunden werden kann.

In einem Schritt 206 kann der Schlüsseldienst 135 die Ablage an den Sender 110 bestätigen. Dieser kann in einem Schritt 208 eine Mailbox (Briefkasten) beim Austauschdienst 130 anlegen. In der Mailbox kann eine Anforderung zur Erstellung eines Schlüssels an den Empfänger 120 hinterlegt werden. Die Anforderung kann die Beschreibung des zu erstellenden Schlüssels umfassen.

In einem Schritt 210 kann eine Einladung zum Zugriff auf den Austauschdienst 130 vom Sender 110 an den Empfänger 120 übermittelt werden. Die Einladung umfasst eine Identifikation der erstellten Mailbox. In einem Schritt 212 kann vom Sender 110 an den Empfänger 120 das zuvor erstellte Geheimnis übermittelt werden. Dabei können für die Einladung und das Geheimnis unterschiedliche Kommunikationskanäle verwendet werden, beispielsweise mittels eines Messaging-Diensts wie iMessage und mittels SMS. Das empfangene Geheimnis kann am Empfängergerät 115 an den Empfänger 120 ausgegeben werden.

In einem Schritt 214 kann am Empfängergerät 125 eine Eingabe erfasst werden, die auf eine Aufforderung zur Eingabe des Geheimnisses folgen kann. An dieser Stelle kann die Person des Empfängers 120 handeln, indem sie beispielsweise das empfangene Geheimnis am Empfängergerät 125 abliest und manuell in ihr Empfängergerät 125 eingibt. Für das vorliegende Verfahren ist nicht die Eingabe, sondern das Erfassen der Eingabe relevant.

In einem Schritt 216 können das Geheimnis und die Identifikation der Beschreibung vom Empfänger 120 an den Verfolgungsdienst 145 übermittelt werden. In einem Schritt 218 kann der Empfänger 120 den Inhalt der Mailbox beim Austauschdienst 130 anfordern. Der Austauschdienst 130 kann daraufhin in einem Schritt 220 die hinterlegte Beschreibung in Form einer Anforderung zur Schlüsselerstellung an den Empfänger 120 bereitstellen.

Der Empfänger 120 kann den Schlüssel auf der Basis der Beschreibung in einem Schritt 222 erstellen. Dazu kann er seinen eigenen privaten Schlüssel verwenden und der erstellte Schlüssel sollte die Eigenschaften und Berechtigungen haben, die in der Beschreibung angegeben sind.

In einem Schritt 224 kann der Empfänger 120 den Schlüssel zur Signierung an den Austauschdienst 130 übermitteln; und den Austauschdienst 130 kann die Anforderung in einem Schritt 226 an den Sender 110 weiterleiten. Der Sender 110 kann den Schlüssel in einem Schritt 228 signieren und den signierten Schlüssel in einem Schritt 230 an den Austauschdienst 130 übermitteln, der ihn in einem Schritt 232 an den Empfänger 130 weiterleiten kann. Dies kann in Form einer Anforderung zum Importieren des Schlüssels (import request) erfolgen.

In einem Schritt 234 kann der Verfolgungsdienst 234 das Geheimnis zusammen mit einem öffentlichen Schlüssel des Empfängers 120 an den Schlüsseldienst 135 übermitteln. Bevorzugt wird außerdem die Identifikation mit übermittelt. Das Geheimnis und/oder die Identifikation können mit einem öffentlichen Schlüssel des Schlüsseldiensts 135 verschlüsselt und/oder mit einem privaten Schlüssel des Empfängers 120 signiert sein.

Optional kann in einem Schritt 236 seitens des Schlüsseldiensts 135 bestimmt werden, dass das vom Empfänger 120 (bzw. vom Verfolgungsdienst 145) empfangene Geheimnis nicht identisch ist mit dem vom Sender 110 (bzw. dem Austauschdienst 130) empfangenen Geheimnis. Dabei kann der Schlüsseldienst 135 das vom Sender 110 empfangene Geheimnis anhand der vom Empfänger 120 empfangenen Identifikation bestimmen (vgl. Schritt 204). In diesem Fall kann der Schlüsseldienst 135 in einem Schritt 238 eine Nachricht bezüglich des falschen Geheimnisses an den Verfolgungsdienst 145 übermitteln, die der Verfolgungsdienst 145 in einem Schritt 240 an den Empfänger 120 weiterleiten kann. In einem Schritt 242 kann ein neuer Versuch unternommen werden, das am Empfänger 120 vom Sender 110 erhaltene Geheimnis auszulesen und ins Empfängergerät 125 einzugeben bzw. eine neue Eingabe des Geheimnisses zu erfassen. Das neu erfasste Geheimnis kann in einem Schritt 244 an den Verfolgungsdienst 145 übermittelt werden und dieser kann das neu erfasste Geheimnis in einem Schritt 246 an den Schlüsseldienst 135 übermitteln. Die Schritte 236 bis 246 können optional erneut durchlaufen werden. Üblicherweise ist eine Anzahl Durchläufe beschränkt, beispielsweise auf insgesamt drei Eingaben des Geheimnisses. Sollten die Geheimnisse dann immer noch nicht übereinstimmen, so kann das Verfahren 200 erfolglos enden.

In einem Schritt 248 kann bestimmt werden, dass die Geheimnisse des Senders 110 und des Empfängers 120 übereinstimmen. Zur Überprüfung kann vorgegangen werden wie oben bzgl. Schritt 236 beschrieben ist. In einem Schritt 250 kann das Vergleichsergebnis abgespeichert werden. Es wird vorgeschlagen, das Vergleichsergebnis dem empfangenen öffentlichen Schlüssel des Empfängers 120 zuzuordnen, sodass das Vergleichsergebnis später bezüglich des öffentlichen Schlüssels aufgefunden werden kann. Sollten die Geheimnisse miteinander identisch sein, so ist das Vergleichsergebnis positiv; sind sie nicht identisch, so ist es negativ. Sollte eines der Geheimnisse nicht am Schlüsseldienst 135 hinterlegt sein, so kann es als negativ angesehen werden.

In einem Schritt 252 kann eine Nachricht über das korrekte Geheimnis an den Verfolgungsdienst 145 übermittelt werden. In einem Schritt 254 kann diese Nachricht vom Verfolgungsdienst 145 an den Empfänger 120 weitergeleitet werden.

In einem Schritt 156 kann der Empfänger 120 ein Anforderung zur Verfolgung des erzeugten Schlüssels (trackkey) an den Verfolgungsdienst 145 übermitteln. Der Anforderung ist eine Attestierung beigefügt, die kryptografisch relevante Informationen umfasst, die das Kraftfahrzeug 105 haben muss, um den erzeugten Schlüssel auf Korrektheit zu überprüfen. Es wird weiter vorgeschlagen, dass der Anforderung der öffentliche Schlüssel des Empfängers 120 beigefügt ist. Die Anforderung kann in einem Schritt 156 vom Verfolgungsdienst 145 an den Schlüsseldienst 135 weitergeleitet werden.

In einem Schritt 260 kann der Schlüsseldienst 135 das Vergleichsergebnis des Schritts 250 beschaffen. Dazu wird vorgeschlagen, dass ein abgespeichertes Vergleichsergebnis bezüglich des jüngst empfangenen öffentlichen Schlüssels des Empfängers 110 aufgefunden wird. Ist das Vergleichsergebnis positiv, so kann der Schlüsseldienst 135 in einem Schritt 262 die Attestierung signieren. Die signierte Attestierung kann in einem Schritt 264 an den Verfolgungsdienst 145 übermittelt werden. Die Attestierung kann dann an den Empfänger 120 und/oder das Kraftfahrzeug 105 weitergeleitet werden.

### Bezugszeichen

- 100: System
- 105: Kraftfahrzeug
- 110: Sender
- 115: Sendergerät
- 120: Empfänger
- 125: Empfängergerät
- 130: Austauschdienst
- 135: Schlüsseldienst
- 140: Übertragungsdienst
- 145: Verfolgungsdienst

- 200: Verfahren
- 202: Beschreibung und Geheimnis hinterlegen
- 204: Geheimnis ablegen
- 206: Ablage bestätigen
- 208: Mailbox erzeugen
- 210: Einladung übermitteln
- 212: Geheimnis übermitteln
- 214: Eingabe des Geheimnisses erfassen
- 216: Identifikation übermitteln
- 218: Inhalt der Mailbox anfordern
- 220: Inhalt der Mailbox bereitstellen

- 222: Schlüssel erstellen
- 224: Signierung des Schlüssels anfordern
- 226: Signierung des Schlüssels anfordern
- 228: Schlüssel signieren
- 230: Anforderung zum Importieren des Schlüssels
- 232: Anforderung zum Importieren des Schlüssels
- 234: Geheimnis senden
- 236: Geheimnis des Senders ungleich Geheimnis des Empfängers
- 238: Benachrichtigung über falsches Geheimnis
- 240: Benachrichtigung über falsches Geheimnis
- 242: Geheimnis neu eingeben
- 244: neues Geheimnis übermitteln
- 246: neues Geheimnis übermitteln

- 248: Geheimnis des Senders identisch mit Geheimnis des Empfängers
- 250: Vergleichsergebnis und öffentlichen Schlüssel abspeichern
- 252: Benachrichtigung über richtiges Geheimnis
- 254: Benachrichtigung über richtiges Geheimnis
- 256: Anforderung zur Verfolgung des Schlüssels
- 258: Anforderung zur Verfolgung des Schlüssels
- 260: Vergleichsergebnis beschaffen
- 262: Attestierung signieren
- 264: Attestierung weiterleiten

## Patentansprüche

1. Verfahren (200) zum Bereitstellen eines digitalen Schlüssels, der eine Nutzung eines vorbestimmten Kraftfahrzeugs (105) absichert, durch einen Sender (110) an einen Empfänger (120); wobei das Verfahren (200) folgende Schritte umfasst:
- Übermitteln, vom Empfänger (120) an einen Schlüsseldienst, eines öffentlichen Schlüssels des Empfängers (120) sowie eines Geheimnisses;
- Vergleichen, durch den Schlüsseldienst, des vom Empfänger (120) empfangenen Geheimnisses mit einem zuvor bezüglich desselben Schlüssels vom Sender (110) empfangenen Geheimnis;
- Zuordnen, durch den Schlüsseldienst, eines Vergleichsergebnisses zum empfangenen öffentlichen Schlüssel des Empfängers (120);
- Übermitteln, vom Empfänger (120) an den Schlüsseldienst, des öffentlichen Schlüssels des Empfängers (120) sowie einer Attestierung eines durch den Empfänger (120) erstellten Schlüssels;
- Bestimmen, durch den Schlüsseldienst, dass dem zuletzt vom Empfänger (120) empfangenen öffentlichen Schlüssel ein positives Vergleichsergebnis zugeordnet ist; und
- Übermitteln der Attestierung vom Schlüsseldienst an das Kraftfahrzeug (105).

2. Verfahren (200) nach Anspruch 1, ferner umfassend ein Vorweisen des Schlüssels und der Attestierung an einem Kraftfahrzeug (105); und des Freigebens einer Nutzung des Kraftfahrzeugs (105).

3. Verfahren (200) nach Anspruch 2, wobei die Attestierung vor einer ersten Nutzung des Kraftfahrzeugs (105) auf der Basis des Schlüssels vorgewiesen werden muss.

4. Verfahren (200) nach einem der vorangehenden Ansprüche, wobei der Sender (110) eine Beschreibung des Schlüssels bestimmt und an den Empfänger (120) übermittelt; und wobei der Empfänger (120) den Schlüssel auf der Basis der Beschreibung erstellt.

5. Verfahren (200) nach Anspruch 4, wobei
- der Sender (110) zusammen mit dem Geheimnis eine Identifikation der Beschreibung an den Schlüsseldienst übermittelt;
- wobei der Empfänger (120) eine Identifikation der Beschreibung zusammen mit dem Geheimnis an den Schlüsseldienst übermittelt; und
- wobei der Schlüsseldienst Geheimnisse miteinander vergleicht, die übereinstimmenden Identifikationen zugeordnet sind, die vom Sender (110) und vom Empfänger (120) empfangen wurden.

6. Verfahren (200) nach Anspruch 5, wobei die Identifikation einen Hash über die Beschreibung umfasst.

7. Verfahren (200) nach einem der vorangehenden Ansprüche, wobei
- der Empfänger (120) den erstellten Schlüssel an den Sender (110) übermittelt;
- der Sender (110) den erstellten Schlüssel signiert; und
- der Sender (110) den signierten Schlüssel an den Empfänger (120) übermittelt

8. Verfahren (200) nach einem der vorangehenden Ansprüche, wobei der Sender (110) das Geheimnis bestimmt; und das Geheimnis an den Schlüsseldienst sowie an den Empfänger (120) übermittelt.

9. Verfahren (200) nach einem der vorangehenden Ansprüche, wobei der Empfänger (120) die Attestierung an den Schlüsseldienst übermittelt, nachdem ihm der Schlüsseldienst einen Hinweis auf ein positives Vergleichsergebnis übermittelt hat.

10. Schlüsseldienst (135), wobei der Schlüsseldienst (135) dazu eingerichtet ist,
- von einem Empfänger (120) einen öffentlichen Schlüssel des Empfängers (120) sowie ein Geheimnis zu empfangen;
- das vom Empfänger (120) empfangene Geheimnis mit einem zuvor bezüglich desselben Schlüssels von einem Sender (110) empfangenen Geheimnis zu vergleichen;
- ein Vergleichsergebnis dem empfangenen öffentlichen Schlüssel des Empfängers (120) zuzuordnen;
- vom Empfänger (120) den öffentlichen Schlüssel des Empfängers (120) sowie eine Attestierung eines durch den Empfänger (120) erstellten Schlüssels zu empfangen;
- zu bestimmen dass dem zuletzt vom Empfänger (120) empfangenen öffentlichen Schlüssel ein positives Vergleichsergebnis zugeordnet ist; und
- die Attestierung vom Schlüsseldienst an das Kraftfahrzeug (105) zu übermitteln.
